# EUROPEAN PATENT APPLICATION

(11) **EP 1 541 317 A1**
(43) Date of publication of application: **15.06.2005**
(21) Application number: 03794190.3
(22) Date of filing: 02.09.2003
(51) Int. Cl.: B29C 45/16, B29C 45/56

(54) **METHOD OF COMPOSITE INJECTION MOLDING AND MOLD**

(30) Priority: 03.09.2002 JP 2002258062
(71) Applicant: Polyplastics Co Ltd, Tokyo 100-6006 (JP)
(72) Inventor: SEITOH, Hiromitsu, Fuji-shi, Shizuoka 416-8533 (JP); MIWA, Katsumasa, Fuji-shi, Shizuoka 416-8533 (JP)
(74) Representative: Peel, James Peter
(86) International application number: PCT/JP2003/011216
(87) International publication number: WO 2004/022306

(57) **Abstract**

The present invention provides a combined injection molding product including a primary resin molding product (1) and a secondary injection molding product (2), which attain improved adhesion to each other and enhanced air tightness therebetween.

The present invention enables selective and local application of compression pressure upon shaping a combined injection molding product by forming, through injection, a secondary resin molding product (2) onto a primary resin molding product (1). The method includes applying a compression pressure on a secondary resin molding product (2) side, to thereby improve adhesion between the primary resin molding product (1) and the secondary resin molding product (2) and air tightness therebetween, wherein portions at which the secondary resin molding product (2) is united with the primary resin molding product (1) with poor adhesion are compressed selectively and locally.

## Description

### TECHNICAL FIELD

The present invention relates to a method of combined injection molding for molding a combined injection molding product through injection molding of a secondary resin molding product onto a primary resin molding product, as well as to a combined injection mold. More particularly, the invention relates to a method of combined injection molding characterized in that portions at which the secondary resin molding product is united with the primary resin molding product with poor adhesion are compressed selectively and locally, as well as a combined injection mold for producing such a combined injection molding product.

### BACKGROUND ART

Conventionally, a combined injection molding product has been molded such that a primary resin molding product is injection-molded, and a secondary resin is injected onto the primary resin molding. Known methods of combined injection molding include two-color molding processes such as a rotary process, a core bag process, and a slide process.

In combined injection molding, ensuring adhesion and air tightness of the secondary resin molding product to the primary resin molding product is a very important technical point in terms of prevention of breakage that could initiate from an interface when pressure is applied to the inside of a combined injection molding product, as well as in terms of prevention of entry of water into the combined injection molding product from the outside.

Conventionally, techniques for ensuring adhesion and air tightness of the secondary resin molding product to the primary resin molding product have been studied in relation to (a) resin material to be molded and (b) molding apparatus and molding method.

According to a known method in relation to (a), a primary resin of a melting point lower than that of a secondary resin is used, whereby the primary resin is melted upon contact with the injected secondary resin.

According to a disclosed technique in relation to (b), an entire region that is expected to be subjected to adhesion or fusion is pressed or compressed by use of a mold mechanism (see, for example, Japanese Patent Application Laid-Open (*kokai*) No. 7-290500 (claim 1, FIG. 1) and Japanese Patent Application Laid-Open (*kokai*) No. 9-11344 (claim 1, FIG. 3)).

However, in the case of a combined injection molding product of a certain shape, these techniques have failed to impart sufficient adhesion.

### DISCLOSURE OF THE INVENTION

An object of the present invention is to provide a combined injection molding product in which a primary resin molding product and a secondary resin molding product attain improved adhesion and air tightness.

The inventors of the present invention have conducted extensive studies in an attempt to obtain a combined injection molding product of improved adhesion and air tightness and have found that adhesion and air tightness of the combined injection molding product can be efficiently improved when, in the course of combined injection molding, vicinities of locations where adhesion becomes poor―such as a portion located a long distance from a secondary resin gate, and portions, such as bosses and ribs, projecting from the surface of a secondary resin molding product―are locally compressed by use of an ejector mechanism of an injection molding machine or a mechanism provided on a mold for moving a portion of the mold by means of fluid pressure, electrical drive, or repulsion force of an elastic member such as a spring. The present invention has been accomplished on the basis of the findings.

Accordingly, invention 1 of the present invention provides a method of combined injection molding for shaping a combined injection molding product by forming, through injection, a secondary resin molding product (2) onto a primary resin molding product (1), which comprises applying a compression pressure on a secondary resin molding product (2) side, to thereby improve adhesion between the primary resin molding product (1) and the secondary resin molding product (2) and air tightness therebetween, characterized in that portions at which the secondary resin molding product (2) is united with the primary resin molding product (1) with poor adhesion are compressed selectively and locally.

According to invention 2 of the present invention, in the method of combined injection molding as described in relation to invention 1 of the present invention, the secondary resin molding product (2) has projecting portions (4) ejecting outside, and the projecting portions (4) are compressed locally.

According to invention 3 of the present invention, in the method of combined injection molding as described in relation to invention 1 of the present invention, the projecting portions (4) are bosses or ribs.

According to invention 4 of the present invention, in the method of combined injection molding as described in relation to invention 2 of the present invention, the projecting portions (4) are bosses or ribs.

According to invention 5 of the present invention, in the method of combined injection molding as described in relation to invention 1 of the present invention, in the case where the secondary resin molding product (2) has a portion (8) located a long distance from a secondary resin gate (7), the portion located a long distance from the secondary resin gate (7) is locally compressed.

According to invention 6 of the present invention, in the method of combined injection molding as described in relation to any one of invention 1 to invention 5 the present invention, the starting time of pressing is within elapse of 20 seconds of surface hardening time after gate sealing time of the secondary resin.

Invention 7 of the present invention provides an injection mold used for the method of combined injection molding as described in any one of invention 1 to invention 5 of the present invention and having a local pressing means (6) for selectively and locally compressing portions at which the secondary resin molding product (2) is united with the primary resin molding product (1) with poor adhesion.

Invention 8 of the present invention provides an injection mold used for the method of combined injection molding as described in relation to invention 6 of the present invention and having a local pressing means (6) for selectively and locally compressing portions at which the secondary resin molding product (2) is united with the primary resin molding product (1) with poor adhesion.

### BRIEF DESCRIPTION OF DRAWINGS

FIG. 1 View showing a primary resin molding product according to examples and a comparative example.

FIG. 2 View showing a combined injection molding product according to examples and a comparative example.

FIG. 3 Plan view of a combined injection molding product according to Example 1 or 2 as viewed from the secondary resin molding product side.

FIG. 4 View showing the state of adhesion, as observed on an ultrasonic analyzer, of a conventional combined injection molding product involving a long distance of flow.

FIG. 5 View showing the state of adhesion, as observed on an ultrasonic analyzer, of a conventional combined injection molding product having projecting portions.

### (Description of Reference Numerals)

1: primary resin molding product
2: secondary resin molding product
3: portion at which compression pressure is applied
4: projecting portion (not shown)
5: rib
6: local pressing means (not shown)
7: secondary resin gate
8: portion located a long distance from secondary resin gate (portion A or C or rib B) (not shown)
9: primary resin gate
10: combined injection molding product
11: primary resin (not shown)
12: secondary resin (not shown)
17: through-hole for secondary resin gate
21: portion of good adhesion
22: portion of inferior adhesion

### BEST MODE FOR CARRYING OUT THE INVENTION

In combined injection molding, an important point for maintaining good adhesion of a secondary resin molding product to a primary resin molding product is to melt the uppermost surface of a hardened primary resin by means of heat of a molten secondary resin so as to establish sufficient fusion between the primary resin molding product and the secondary resin molding product.

Another important point is that the interface between the primary resin and the secondary resin must be free from fusion fracture or separation which could result from contraction or expansion of the resins in the course of transition of the resins from a molten state to a hardened state.

The present invention is characterized in that, in order to carry out effective and sufficient compression, pressure is locally applied in accordance with the local hardening condition of the secondary resin and that, in order to carry out more effective application of pressure, portions corresponding to ribs and bosses, which encounter difficulty in hardening of molten resin, are locally compressed.

A method of combined injection molding and a combined injection mold according to the present invention will be described hereinafter with reference to the drawings.

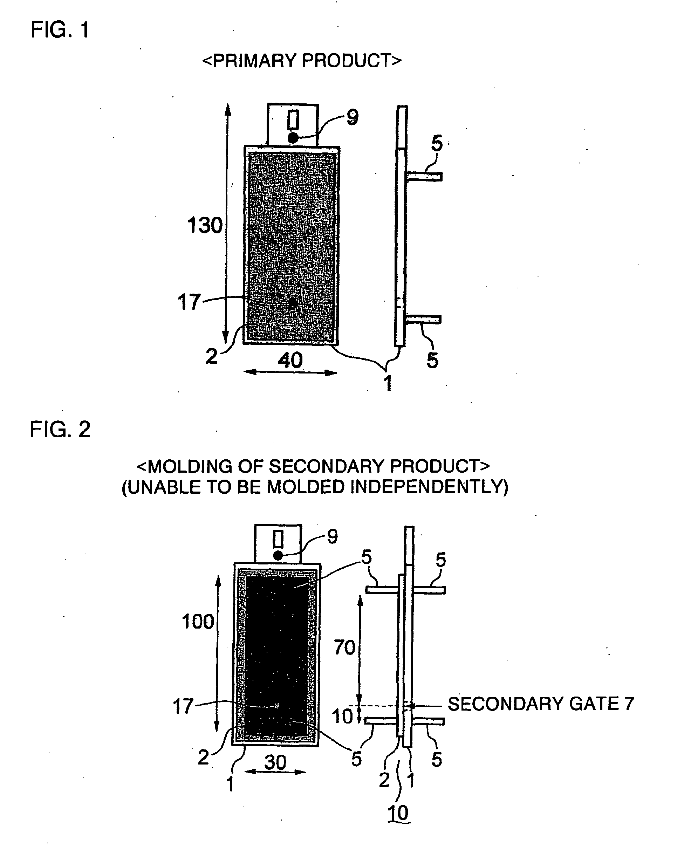

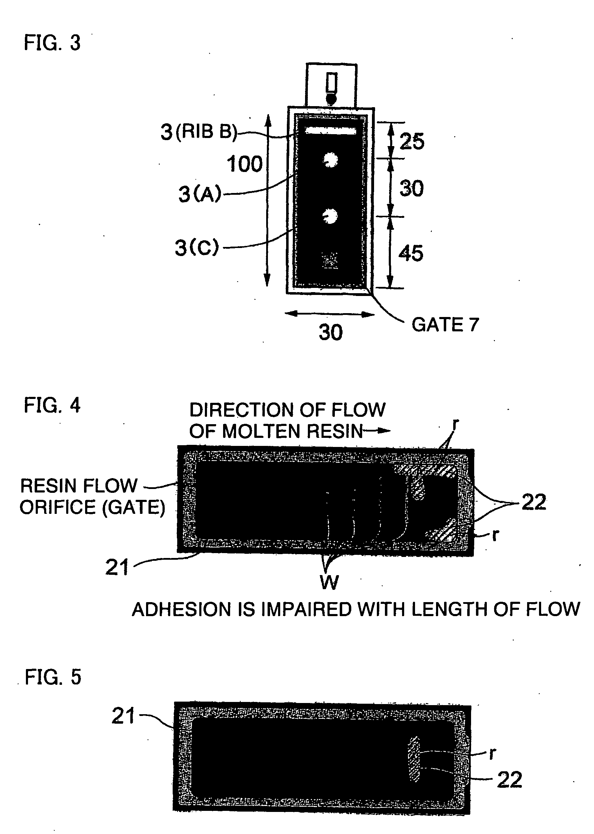

FIG. 2 is a plan view of a combined injection molding product 10 as viewed from the secondary resin molding product 2 side, which is formed on a primary resin molding product 1 by injecting a secondary resin 12 from a secondary resin gate 7 in a mold filling manner to thereby yield the combined injection molding product 10. In FIG. 3, a portion 8 located a long distance of flow from the secondary resin gate 7 is a portion 3 to be pressed. Reference numeral 5 denotes ribs used to measure adhesion strength.

According to the findings of the present inventors, a portion located a long distance of flow from a secondary resin gate position involves the below problem. In the course of flow of a molten secondary resin over a long distance, a mold gradually removes heat from the molten secondary resin, and thus the molten secondary resin encounters difficulty in sufficiently melting the primary resin. Also, as hardening of the molten secondary resin progresses in the vicinity of the resin gate, propagation of pressure for pressing the primary and secondary resins against each other declines, and thus fusional adhesion retards. Even when the melting is carried out, subsequent contraction occurs to a great extent, thereby causing occurrence of fusion fracture or separation. As a result, sufficient adhesion cannot be obtained.

Basically, in order to apply pressure to a secondary resin molding product, pressing must be started before the secondary resin is completely hardened. In actual combined injection molding, hardening starts from the stage where a molten resin flows and comes into contact with a mold. Thus, from the initial stage of flow of the molten resin, hardening progresses in the vicinity of the resin gate. At the stage where the molten resin reaches a near end destination of flow, which corresponds to a near distal end of the secondary molding product, hardening progresses to a certain extent in the vicinity of the resin gate. Therefore, application of pressure on the whole body of a combined injection molding product encounters difficulty in achieving ensured adhesion and air tightness. When pressing is carried out while the resin fails to reach the end destination of flow, a corresponding region that is not filled with resin is not pressed; thus, pressing fails to yield the expected effect.

In a case involving a long distance of flow from the secondary resin gate position or involving portions, such as bosses and ribs, projecting outward from the surface of a combined injection molding product, conventional combined injection molding tends to be inferior in adhesion of the secondary resin molding product to the primary resin product as measured at positions corresponding to such portions.

FIG. 4 shows the state of adhesion of the secondary resin molding product to the primary resin molding product as observed on an ultrasonic analyzer, in the case of a combined injection molding product involving a long distance of flow from the secondary resin gate position. FIG. 5 shows the state of adhesion of the secondary resin molding product to the primary resin molding product as observed on the ultrasonic analyzer, in the case of a combined injection molding product having portions, such as bosses and ribs, projecting from its surface. A portion 21 of good adhesion is observed in black. Portions 22 of inferior adhesion are observed in gradations ranging from white (represented by w) to red (represented by r). The analysis results reveal that adhesion is impaired with the distance of flow and that projecting portions are inferior in adhesion.

Therefore, according to the present invention, a portion 8 located in a long distance of flow from the secondary resin gate position is locally compressed.

The portion 3 to be pressed, which is the above-mentioned portion 8 to be locally compressed, is in a number of one or more. The portion 8 may be locally compressed at a plurality of positions.

A "position located in a long distance of flow from the secondary resin gate" means that the position is located such that the ratio between the distance to the position from the secondary resin gate and the thickness d of a molding product (L/d) is 20 or more. No upper limit is imposed on the ratio, so long as short shot does not occur. When the ratio is less than 20, pressing fails to yield a marked effect.

A portion to be compressed may be in a number of one or more. No particular limitation is imposed on the area of the portion to be compressed. However, because of limitations associated with a drive mechanism, an excessively large area reduces a pressing force, thereby leading to difficulty in yielding the effect of pressing.

Preferably, a pressing force is equal to or greater than a dwell pressure applied to resin. Preferably, a pressing volume is near a contraction volume of the secondary resin.

Preferably, the starting time of pressing is within elapse of 20 seconds of gate hardening time (usually, substantially equal to surface hardening time of resin filled into the mold) after injection of the secondary resin; i.e., pressing is started within the period of time. If pressing is started before the starting time of pressing, a pressing force escapes from the unhardened gate and fails to be sufficiently applied to the resin. If pressing is started after the starting time of pressing, the resin surface is hardened excessively, and thus the effect of pressing is not sufficiently yielded.

FIG. 3 is a plan view of the combined injection molding product 10 as viewed from the secondary resin molding product 2 side, which is formed on the primary resin molding product 1 by injecting the secondary resin 12 from the secondary resin gate 7 in a mold filling manner to thereby yield the combined injection molding product 10. In FIG. 3, portions A and C and a rib B provided on the portion 8 located a long distance of flow from the secondary resin gate 7 are portions 3 to be pressed, and the rib B also serves as a rib used to measure adhesion strength.

Projecting portions 4, such as ribs and bosses, projecting from the surface of the secondary molding product are prone to involve fusion fracture or separation after fusion of primary and secondary resins subsequent to remelting of the primary resin as mentioned above and thus tend to involve a drop in adhesion.

Specifically, the projecting portions 4 projecting outward from the combined injection molding product are portions, such as bosses and ribs, projecting from the surface of the secondary molding product. Thus, a surface-depressing phenomenon called a sink mark arises on the interface between the primary resin and the secondary resin at positions located behind the bosses and ribs. As a result, fusion fracture or separation is prone to occur on the interface between the primary and secondary resins. Additionally, flow of the molten resin into mold cavities corresponding to bosses and ribs causes resin orientation to differ from that in a region where the secondary resin flows in a planar manner. Thus, linear expansion varies locally, also leading to fusion fracture or separation on the interface between the primary and secondary resins.

Preferably, in order to carry out effective pressing, portions to be compressed are mounded portions, such as ribs and bosses, of a molding product; i.e., the projecting portions 4. Formation of a mound on a molding product yields the effect of increasing the thickness of the molding product, whereby internal hardening of molten resin is slowed down. Thus, pressing can be controlled under a wider range of pressing conditions, thereby allowing effective pressing.

The portion 3 to be pressed is in a number of one or more. Pressure may be applied locally at a plurality of positions.

The projecting portions 4 have a height of 0.5 mm or more.

In the case where a plurality of portions of inferior adhesion are to be potentially formed, the starting time of pressing is locally adjusted according to the local hardening condition of the molten secondary resin, whereby high adhesion can be obtained.

A mold for use in combined injection resin molding according to the present invention is adapted to mold a combined injection molding product by injecting the secondary resin injection molding product 2 onto the primary resin molding product 1 and to compress selectively and locally, from the secondary resin molding product side, portions at which the secondary resin molding product 2 is united with the primary resin molding product 1 with poor adhesion.

A local pressing means 6 may be a means that utilizes an ejector mechanism of an injection molding machine; for example, an ejector pin, or a means for performing pressing within a mold by means of a movable core that is driven oil-hydraulically, pneumatically, or by spring force.

Resins usable in the present invention are thermoplastic resins. Usable types of thermoplastic resin include crystalline resin, noncrystalline resin, biodegradable resin, nonbiodegradable resin, synthetic resin, natural resin, general-purpose resin, engineering resin, and polymer alloy.

Examples of thermoplastic resin include polyethylene (PE), polypropylene (PP), polystyrene (PS), AS resin, ABS resin, polyvinyl chloride (PVC), polyacrylonitrile (PAN), (meth)acrylic resin, cellulose resin, polyurethane, and elastomer.

Examples of engineering resin include aliphatic polyamides such as nylon 6, nylon 6,6, nylon 12, and nylon 6,12; aromatic polyamides (PA); aromatic polyester resins (such as polyethylene terephthalate (PET) and polybutylene terephthalate (PBT)); polycarbonates (PC); polyacetal; polyphenylene ether (PPO); polyphenylene sulfide (PPS); liquid crystalline polymers such as liquid crystalline polyester and liquid crystalline polyamide; and fluorine-containing resin.

Usable biodegradable resins include aliphatic polyesters derived from aliphatic dicarboxylic acid, aliphatic diol, aliphatic hydroxycarboxylic acid, or aliphatic polyester derived from a cyclic compound thereof, and aliphatic polyesters which are derived therefrom by increasing their molecular weight through linking of diisocyanate or the like.

The primary resin and the secondary resin may be the same resin or different resins. Employment of a working temperature of the secondary resin higher than the hardening temperature of the primary resin enhances adhesion.

The primary and secondary resins may contain various fillers, stabilizers, and modifiers, which are of any shape, such as fibrous, platelike, spherical, and indeterminate, and are either inorganic or organic.

Applications of a combined injection resin molding product according to the present invention include exterior components, such as housings; electric components, such as switches and connectors; mechanism components, such as levers, gears, and cams; and hollow components.

### (Examples)

The present invention will be described hereinafter in detail by way of example, which should not be construed as limiting the invention.

### (Examples 1 and 2 and Comparative Example 1)

DURANEX 303RA (product of WinTech Polymer Ltd.; low-melting-point-type glass-fiber-containing PBT resin of a melting point of about 205°C) was used as the primary resin, and DURANEX 3300 (product of WinTech Polymer Ltd.; ordinary-type glass-fiber-containing PBT resin of a melting point of about 225°C) was used as the secondary resin.

First, a primary resin molding product as shown in FIG. 1 was molded. The cooled-and-hardened primary resin molding product was cooled to harden and was then placed in the cavity of a mold. The secondary resin was injected onto the primary resin molding product through a pin gate of a diameter of 1.5 mm under the conditions of a cylinder temperature of 270°C and an injection speed of 10 mm/s, whereby the mold of a temperature of 80°C was filled with the secondary resin. Thus, a combined injection molding product as shown in FIG. 2 was obtained.

A product portion of the primary resin molding product measures 130 mm (length) x 40 mm (width) x 3 mm (thickness). A product portion of the secondary resin molding product measures 100 mm (length) x 30 mm (width) x 2 mm (thickness). The area of adhesion between the primary resin molding product and the secondary resin molding product is 100 mm x 30 mm.

Reference numeral 9 denotes a primary resin gate, and reference numeral 17 denotes a through-hole for a secondary resin gate. Reference numeral 7 denotes the secondary resin gate. Two ribs were provided on the primary resin molding product, and two ribs were provided on the secondary resin molding product. The ribs provided on the secondary resin molding product are located 10 mm and 70 mm, respectively, away from the secondary resin gate 7. The ribs provided on the primary resin molding product are located behind the corresponding ribs provided on the secondary resin molding product.

In Example 1, local pressing was carried out by utilization of the ejector mechanism of an injection molding machine. As shown in FIG. 3, the position of local pressing is position A, which is in a long distance of flow from the secondary resin gate. The diameter of a portion to be pressed is 10 mm; pressing force is 3,000 kg; and a pressing stroke varies with time elapsing after injection. At the elapse of 0 second after injection, the cavity is not completely filled with resin, and thus pressing is not carried out.

In Example 2, local pressing was carried out by utilization of the ejector mechanism of the injection molding machine. As shown in FIG. 3, the position of local pressing is position B, at which the far-side rib, distant from the secondary resin gate, of the secondary molding product is located (the gate-side rib is not subjected to local pressing). A portion to be pressed measures 15 mm x 1.5 mm (rectangle); pressing force is 3,000 kg; and a pressing stroke is 0.5 mm.

In Comparative Example 1, the entire surface of adhesion was pressed. Full-surface pressing was carried out in the mold-closing direction at a pressing force of 100 t and a maximum pressing stroke of 0.1 mm.

The starting time of pressing is the starting time of advancing the ejector pin and is represented by seconds as measured after injection.

The ribs of the primary and secondary resin molding products were pulled, and adhesion strength (maximum load) was measured at the position of the far-side ribs.

Table 1 shows measurement results of the starting time of pressing, pressing stroke, and adhesion strength.

In Table 1, EJ Stop1 means surface hardening time in the case of pressing the portion A, and EJ Stop 2 means surface hardening time in the case of pressing the rib B.

Table 2 shows measurement results of adhesion strength in the case where the portions A and C are pressed.

**Table 1**

| Starting time of pressing (position of compression) | | Example 1 (portion A distant from secondary gate) | | Example 2 (rib B distant from secondary gate) | | Compar. Example 1 (full surface) |
|---|---|---|---|---|---|---|
| After injection (sec) | | Pressing stroke (mm) | Adhesion strength (N) | Pressing stroke (mm) | Adhesion strength (N) | Adhesion strength (N) |
| 0 | - | 0.00 | 1067 | 0.00 | 1185 | 1197 |
| 1.5 | | 0.40 | 1233 | 0.42 | 1280 | 1246 |
| 3 | gate seal | 0.38 | 1300 | 0.41 | 1325 | 1173 |
| 5 | | 0.35 | 1385 | 0.39 | 1538 | 1194 |
| 7.5 | | 0.30 | 1435 | 0.34 | 1638 | 1221 |
| 10 | EJ Stop1 | 0.00 | 1529 | 0.15 | 1749 | 1237 |
| 15 | EJ Stop2 | 0.00 | 1583 | 0.00 | 1937 | 1203 |
| 20 | | 0.00 | 1590 | 0.00 | 1950 | 1221 |
| 25 | | 0.00 | 1534 | 0.00 | 1902 | 1208 |
| 30 | | 0.00 | 1421 | 0.00 | 1856 | 1183 |
| 40 | | 0.00 | 1299 | 0.00 | 1645 | 1200 |
| 160 | | 0.00 | 1275 | 0.00 | 1403 | 1211 |

**Table 2**

| | | Secondary molding product (2 mm) | | Secondary molding product (1 mm) | |
|---|---|---|---|---|---|
| | | Gate side | Far side from gate | Gate side | Far side from gate |
| Compression not used | | 2020 | 1067 | 390 | 192 |
| Compression used (10 seconds) | Portion A compressed | 2080 | 1529 | 411 | 304 |
| | Portion C compressed | 2152 | 1205 | 472 | 243 |

As is apparent from the above results, as compared with adhesion strength obtained by pressing the entire adhesion surface as practiced conventionally, local pressing according to the present invention provides enhanced adhesion strength.

In full-surface pressing, even when the starting time of pressing is delayed, the effect of pressing does not emerge for the following reason: delay in the starting time promoted surface hardening, and thus pressing could not be actually carried out. In order to solve such a problem involved in the conventional method, the present invention employs local pressing, which is carried out locally and thus can be readily controlled. Thus, the present invention improves adhesion strength of a molding product.

Even in practice of local pressing, delaying the starting time of pressing to the greatest possible extent is effective in terms of attainment of higher adhesion strength. The local pressing method of the present invention, particularly the method in which bosses, ribs, and the like are pressed, allows delay in the starting time of pressing, thereby improving adhesion strength.

In molding of crystalline thermoplastic resins as employed in the embodiment, surface hardening starts at the respective solidification points of the resins, whereby the present method becomes more effective.

### INDUSTRIAL APPLICABILITY

According to the present invention, portions at which the secondary resin molding product is united with the primary resin molding product with poor adhesion are pressed selectively and locally, whereby pressing can be effectively carried out.

Local pressing allows effective application of pressing to portions whose adhesion is to be improved, irrespective of surface hardening distribution of a molten resin at the time of filling a mold with the resin, whereby adhesion can be improved.

The present invention can provide a combined injection molding product in which adhesion and air tightness of the secondary resin molding product to the primary resin molding product are improved.

## Claims

1. A method of combined injection molding for shaping a combined injection molding product by forming, through injection, a secondary resin molding product (2) onto a primary resin molding product (1), which comprises applying a compression pressure on a secondary resin molding product (2) side, to thereby improve adhesion between the primary resin molding product (1) and the secondary resin molding product (2) and air tightness therebetween, **characterized in that** portions at which the secondary resin molding product (2) is united with the primary resin molding product (1) with poor adhesion are compressed selectively and locally.

2. The method of combined injection molding as described in claim 1, wherein the secondary resin molding product (2) has projecting portions (4) ejecting outside, and the projecting portions (4) are compressed locally.

3. The method of combined injection molding as described in claim 1, wherein the projecting portions (4) are bosses or ribs.

4. The method of combined injection molding as described in claim 2, wherein the projecting portions (4) are bosses or ribs.

5. The method of combined injection molding as described in claim 1, wherein, in the case where the secondary resin molding product (2) has a portion (8) located a long distance from a secondary resin gate (7), the portion located a long distance from the secondary resin gate (7) is locally compressed.

6. The method of combined injection molding as described in any one of claims 1 to 5, wherein the starting time of pressing is within elapse of 20 seconds of surface hardening time after gate sealing time of the secondary resin.

7. An injection mold which is for use with the method of combined injection molding as described in any one of claims 1 to 5 and which has a local pressing means (6) for selectively and locally compressing portions at which the secondary resin molding product (2) is united with the primary resin molding product (1) with poor adhesion.

8. An injection mold which is for use with the method of combined injection molding as described in claim 6 and which has a local pressing means (6) for selectively and locally compressing portions at which the secondary resin molding product (2) is united with the primary resin molding product (1) with poor adhesion.
